# FASCICULE DE BREVET EUROPEEN

(11) **EP 0 836 586 B1**
(45) Date de publication et mention de la délivrance du brevet: **12.05.1999**
(21) Numéro de dépôt: 96924931.7
(22) Date de dépôt: 04.07.1996
(51) Int. Cl.: C05F 3/00, C05F 17/02, C05F 17/00

(54) **INSTALLATION DE SECHAGE DE DEJECTIONS D'ANIMAUX, NOTAMMENT DE FIENTES DE VOLAILLES**
ANLAGE ZUR TROCKNUNG VON TIEREXKREMENTEN INSBESONDERE VON GEFLÜGELNEXKREMENT
APPARATUS FOR DRYING ANIMAL EXCRETA, PARTICULARLY POULTRY DROPPINGS

(30) Priorité: 04.07.1995 FR 9508286
(43) Date de publication de la demande: 22.04.1998
(73) Titulaire: Chardine, Raymond, 22400 Lamballe (FR)
(72) Inventeur: Chardine, Raymond, 22400 Lamballe (FR)
(74) Mandataire: Branger, Jean-Yves
(86) Numéro de dépôt international: FR9601040
(87) Numéro de publication internationale: WO9702222

(56) Documents cités:
- EP-A- 0 293 976
- EP-A- 0 498 084
- DE-A- 2 331 622
- DE-A- 2 723 581
- DE-A- 3 244 552
- US-A- 2 679 114
- US-A- 4 710 032

## Description

La présente invention se rapporte à une installation pour le séchage de déjections d'animaux, notamment de fientes de volailles.

Du fait de leur haute teneur en eau, on a déjà proposé un grand nombre de techniques de séchage de fientes de volailles, dont le but principal est d'obtenir un produit déshydraté et désodorisé, facilement utilisable pour des applications ultérieures. Une application principale est celle de fertilisant.

Le procédé le plus simple consiste à insuffler, à l'intérieur des bâtiments d'élevage, de l'air au dessus des convoyeurs à tapis sans fin qui sont disposés sous les cages d'élevage et sur lesquels tombent les déjections des volailles. Toutefois, l'air ne se charge que partiellement en humidité, du fait de son passage rapide au contact de la couche mince de fientes étalée sur les convoyeurs. Pour obtenir un meilleur rendement, il faudrait mettre en oeuvre des volumes d'air très importants et assurer des turbulences au sein de celui-ci, ce qui est très coûteux en énergie.

Dans certains cas, ce type de procédé est mis en oeuvre au sein de tunnels de séchage, en dehors des bâtiments d'élevage. Les inconvénients majeurs de ce type d'installation résident dans son encombrement et sa complexité mécanique.

On décrit dans le document EP-B-0 210 196 un procédé et une installation de séchage et de conditionnement de fumier de poules. Le procédé comprend une étape de transformation microbiologique du fumier, ce qui nécessite de devoir surveiller attentivement tous les paramètres de la transformation, pour être sûr d'assurer un bon séchage du fumier. De plus, l'installation correspondante est nécessairement complexe et coûteuse.

Le document US-A-2679114 se rapporte à un appareil et à un procédé pour la transformation et le compostage de fumier. L'appareil comporte un convoyeur qui achemine le fumier brut en partie supérieure d'un silo. Le fond du silo est formé de deux cloisons ajourées et convergentes entre lesquelles s'étend un canal. Au fond du canal est prévu un convoyeur disposé dans une goulotte. Au dessus du convoyeur s'étendent deux arbres rotatifs parallèles pourvus de pales. L'entraînement en rotation des arbres provoque le transfert d'une partie du fumier dans le convoyeur.

De l'air sous pression, éventuellement chargé d'humidité, est introduit dans la masse de fumier, par la partie inférieure du silo, pour assurer sa transformation. L'air circule à contre-courant par rapport au fumier, ce qui contribue à améliorer son séchage ou sa transformation.

Le document DE-A-2723581 concerne un procédé et une installation de décomposition aérobie de solides organiques. L'installation comprend un appareil de préséchage du matériau, une enceinte de stockage et un silo pour le produit traité et sec. Cette enceinte et ce silo communiquent par leur fond avec un convoyeur à double vis qui réalise un mélange intime du produit préséché et du produit sec.

Ce mélange est alors transféré dans un réacteur de décomposition à fond mobile, via un convoyeur vertical. Le mélange peut être sélectivement dirigé vers une tour de séchage et le produit final est stocké dans le silo précité.

Il est à noter que le fond mobile est, comme dans le document précédent, constitué d'un ensemble d'arbres rotatifs dont la périphérie est pourvue de doigts ou de pales.

Ce type de fond mobile et perméable à l'air présente de sérieux inconvénients.

En effet, lorsque les déjections séchées s'agglomèrent sous forme de mottes ressemblant à des mottes de terres, on a affaire à un matériau particulièrement dur. La puissance d'entraînement des arbres en rotation doit être particulièrement élevée pour arriver à désagréger les mottes et les faire passer dans les interstices situés entre les doigts ou pales de deux arbres voisins. Une telle augmentation de puissance est coûteuse en énergie.

Par ailleurs, lorsque les arbres sont au repos, c'est à dire non actionnés en rotation, les interstices précités laissent forcément filtrer la fraction la plus fluide du matériau séché, ce qui est indésirable.

La présente invention vise à pallier ces inconvénients.

Plus précisément, elle vise à fournir une installation de séchage de conception simple et peu coûteuse, qui permet d'assécher efficacement les fientes de volailles en utilisant un volume d'air réduit. Elle vise à atteindre ce but en utilisant peu d'énergie, tout en récupérant l'air utilisé avec un haut degré de saturation en humidité.

Par ailleurs, elle vise à fournir une installation dont le fond mobile et perméable à l'air ne présente pas les désagréments décrits ci-dessus.

Cette installation de séchage de déjections d'animaux, notamment de fientes de volailles, est du type comprenant:
- des moyens pour mélanger des déjections fraîches avec des déjections sèches ;
- une enceinte de séchage adaptée pour recevoir le mélange ainsi réalisé, le fond de celle-ci étant prévu pour retenir le mélange tout en étant perméable à l'air, ce fond consistant en un ensemble d'éléments adjacents aptes à former chacun un moyen de retenue des déjections et comportant des moyens qui permettent, périodiquement, de transférer hors de l'enceinte et au travers de ce fond, une couche de déjections sèches;
- des moyens d'insufflation d'air dans ladite enceinte, au travers dudit fond.

Elle se caractérise essentiellement par le fait que lesdits éléments consistent en des profilés parallèles présentant une âme longitudinale et au moins une partie généralement transversale, articulés autour d'axes disposés sensiblement dans un même plan horizontal, et que lesdits moyens adaptés pour faire basculer simultanément les profilés entre deux positions extrêmes dans lesquelles la section transversale de ladite âme s'étend généralement obliquement par rapport à la verticale, de sorte que les profilés retiennent les déjections, via une position intermédiaire dans laquelle la section transversale de ladite âme occupe une position généralement verticale autorisant l'écoulement des déjections entre les profilés.

De cette manière, aucune fraction de déjections ne s'écoule entre les profilés tant que ceux-ci n'ont pas basculé. De plus, lors du mouvement de basculement, il ne s'opère aucune friction sur les matières, si bien que l'énergie nécessaire à ce basculement est peu élevée.

Par l'expression "déjections fraîches", on entend des déjections provenant d'un élevage, qui n'ont pas encore été séchées et qui présentent un taux d'humidité élevé.

Par ailleurs, selon certaines caractéristiques avantageuses mais non limitatives:
- chaque profilé affecte en coupe transversale, la forme générale d'un "T" renversé avec une branche longitudinale et une barre transversale;
- ledit profilé comporte une seconde barre transversale, parallèle et opposée à la première, de sorte qu'il affecte la forme générale d'un "I", en coupe transversale;
- la face supérieure de la seconde barre transversale est pourvue d'une série de doigts, généralement parallèles à la branche longitudinale;
- le basculement simultané desdits éléments est réalisé au moyen d'au moins une biellette;
- ladite biellette est articulée par rapport auxdits éléments, au moyen d' une pièce rapportée à la première barre transversale;
- elle comprend des moyens d'actionnement de ladite biellette, tels qu'un vérin;
- les moyens aptes à mélanger des déjections fraîches avec des déjections sèches comprennent une vis d'Archimède;
- elle comprend des moyens pour acheminer une partie des déjections sèches transférées hors de l'enceinte vers les moyens de mélange avec des déjections fraîches;
- l'air d'insufflation provient d'un bâtiment d'élevage desdits animaux.

D'autres caractéristiques et avantages de l'invention apparaîtront à la lecture de la description détaillée qui va suivre de certains modes de réalisation préférentiels. Cette description sera faite en référence aux dessins annexés dans lesquels :
- la figure 1 est une représentation très schématique d'une installation conforme à l'invention, destinée à montrer les différents éléments qui la composent ;
- la figure 2 est une vue en coupe transversale d'une partie de l'installation de la figure 1, renfermant une enceinte de séchage ;
- la figure 3 est une vue en coupe transversale d'une variante de réalisation de la partie inférieure de l'équipement de la figure 2 ;
- la figure 4 est une vue en coupe transversale de deux éléments adjacents formant partie du fond perméable à l'air de l'enceinte de séchage ;
- la figure 5 est une vue de face de l'un de ces éléments, lequel a été représenté équipé d'un équipement d'actionnement;
- la figure 6 est une vue analogue à la figure 4, montrant les moyens permettant de faire basculer l'ensemble des éléments constituant le fond;
- la figure 7 est une vue en bout d'une variante de réalisation des éléments;
- la figure 8 est une vue partielle de face de l'élément de la figure 7;
- la figure 9 est une vue analogue à la figure 6 avec les éléments selon la variante de réalisation des figures 7 et 8.

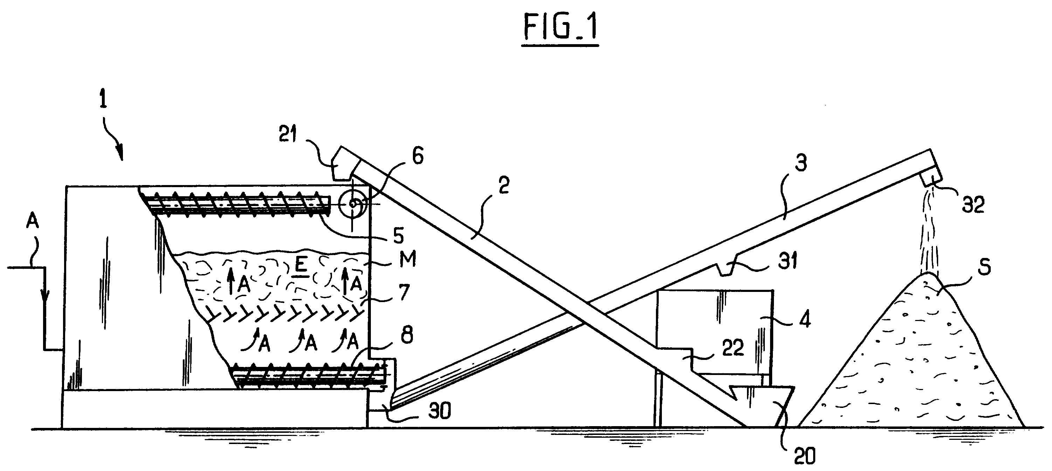

L'installation représentée à la figure 1 comprend essentiellement une unité de séchage 1, deux convoyeurs à vis d'Archimède 2 et 3, ainsi qu'une unité de transfert 4 d'un convoyeur à l'autre.

Le convoyeur 2 est disposé de telle manière que son extrémité amont repose au sol, tandis que son extrémité aval surplombe l'unité de séchage 1. Il s'agit d'un convoyeur de type courant, dans lequel la vis est logée à l'intérieur d'une gaine métallique. Son extrémité amont 20 est ouverte et a la forme d'une goulotte. C'est par cette extrémité que sont introduites les déjections telles que des fientes de volailles à sécher. Elles sont amenées à cet endroit par tout moyen approprié tel qu'un convoyeur à bande sans fin non représenté.

La gaine du convoyeur 2 comporte, à proximité de l'ouverture 20, une seconde ouverture 22 qui communique avec l'unité de transfert 4. Nous expliquerons plus loin sa fonction.

L'extrémité aval 21 du convoyeur est pourvue d'un embout distributeur apte à déverser les fientes au dessus de l'unité 1.

Le second convoyeur 3 est connecté par son extrémité amont 30 à la partie inférieure de l'unité 1. Son extrémité opposée 32 est disposée en hauteur au dessus du sol et est apte à y déverser des fientes sèches. Ce convoyeur est du même type que le précédent et présente également une ouverture auxiliaire 31 qui surplombe l'unité de transfert 4.

Cette unité 4 comprend une trémie destinée à recevoir les matières tombant de l'ouverture 31 du convoyeur 3. Le fond de la trémie communique avec une vis sans fin non représentée dont l'extrémité aval débouche au niveau de l'ouverture 22 du convoyeur 2.

L'unité de séchage 1 a une forme sensiblement parallélépipédique et est ouverte en son sommet. Le long d'une de ses parois longitudinales, elle est pourvue d'une vis d'Archimède 6, dont le rôle est de répartir les matières déversées par le convoyeur 2. Dans ce même plan situé en partie supérieure de l'unité, mais perpendiculairement, sont prévues deux vis de répartition 5. Ce nombre pourrait être plus élevé, par exemple cinq, de manière à couvrir toute la surface de l'unité.

On notera que les moyens de guidage et d'entraînement des différentes vis n'ont pas été représentés dans un simple but de simplification. Leur nature ainsi que leur agencement sont à la portée de l'homme du métier.

Ces vis 5 et 6 délimitent la partie supérieure d'une enceinte de séchage E dont le fond est désigné sous la référence 7.

Il s'agit d'un fond adapté pour supporter et retenir une charge de fientes tout en étant perméable à l'air, c'est à dire apte à se laisser traverser par celui-ci.

Ce fond est formé d'un ensemble d'éléments adjacents 70 disposés dans un même plan horizontal et parallèles à lavis 6.

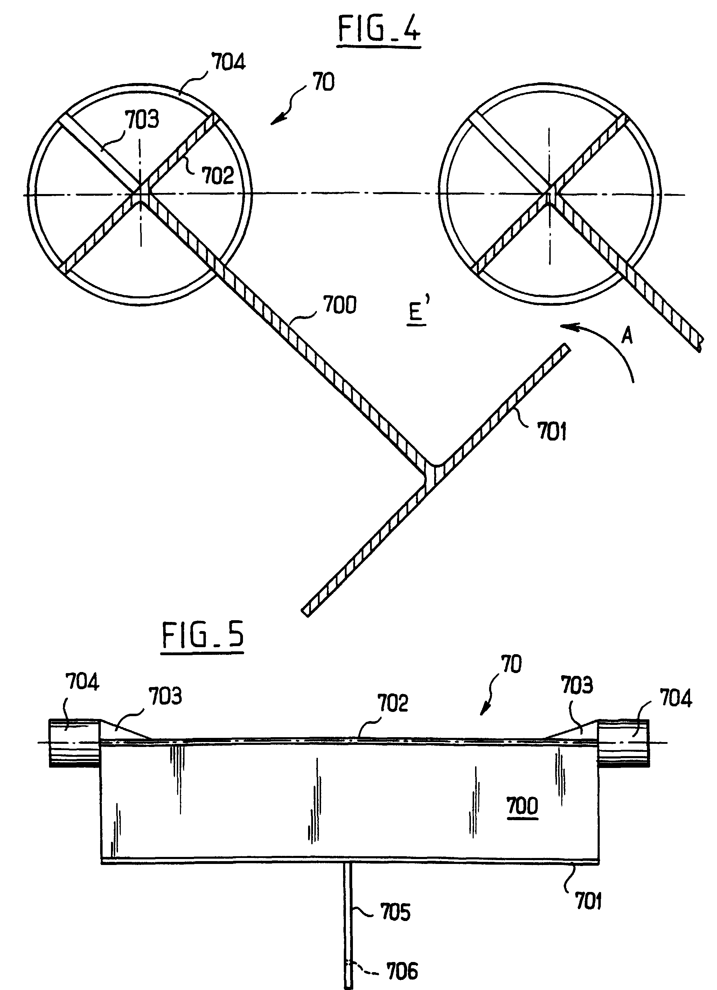

Chaque élément est constitué d'un profilé par exemple métallique qui affecte, en coupe transversale (figure 4), la forme générale d'un "I". Il comprend une âme ou branche longitudinale 700, qui se rattache, à sa base, à une première barre transversale 701, et, en son sommet, à une seconde barre transversale 702. Ces barres s'étendent tout le long de l'âme 700. De préférence et comme montré sur les figures, la seconde barre est moins large que la première.

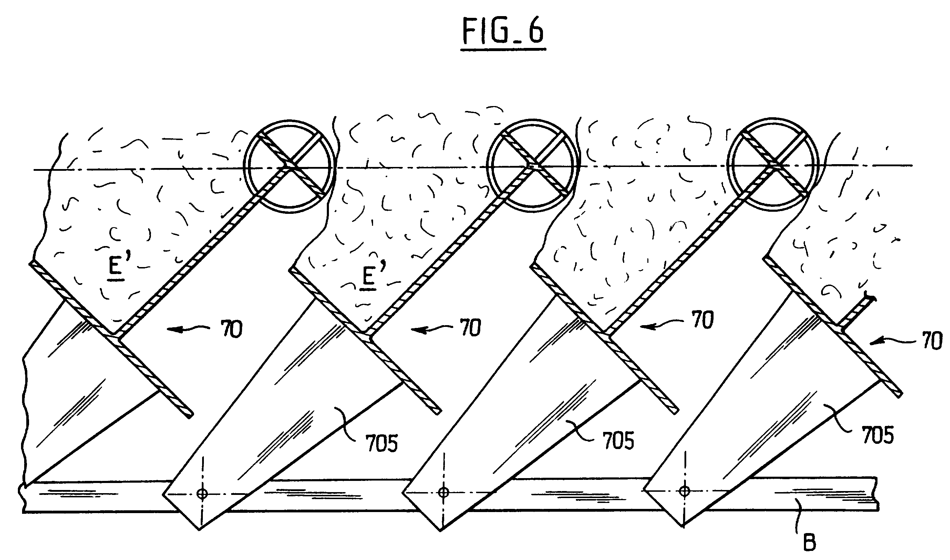

Comme le montrent les figures 4 et 5, des pièces cylindriques 704 sont soudées aux extrémités opposées du profilé, dans la partie de celui-ci où la seconde barre 702 rejoint l'âme 700. Une pièce triangulaire 703 assure la tenue de l'ensemble.

Les pièces - ou tourillons - 704 sont adaptées pour servir d'axes de rotation pour l'élément 70. Pour ce faire, elles sont guidées de manière appropriée mais non représentée dans les cloisons transversales opposées de l'unité 1.

A la face inférieure de la base 701 est soudé, sensiblement à mi-longueur, un fer plat 705 qui s'étend dans un plan perpendiculaire à celui de la branche 700.

Chaque fer plat 705 est percé d'un trou 706. Comme le montre la figure 6, tous les éléments sont montés à ce niveau, de manière articulée, sur une biellette **B**. Ce montage est réalisé de telle manière qu'en période d'utilisation de l'enceinte pour le séchage de fientes, l'âme 700 occupe, en coupe transversale, une position formant un angle de 45° environ avec la verticale.

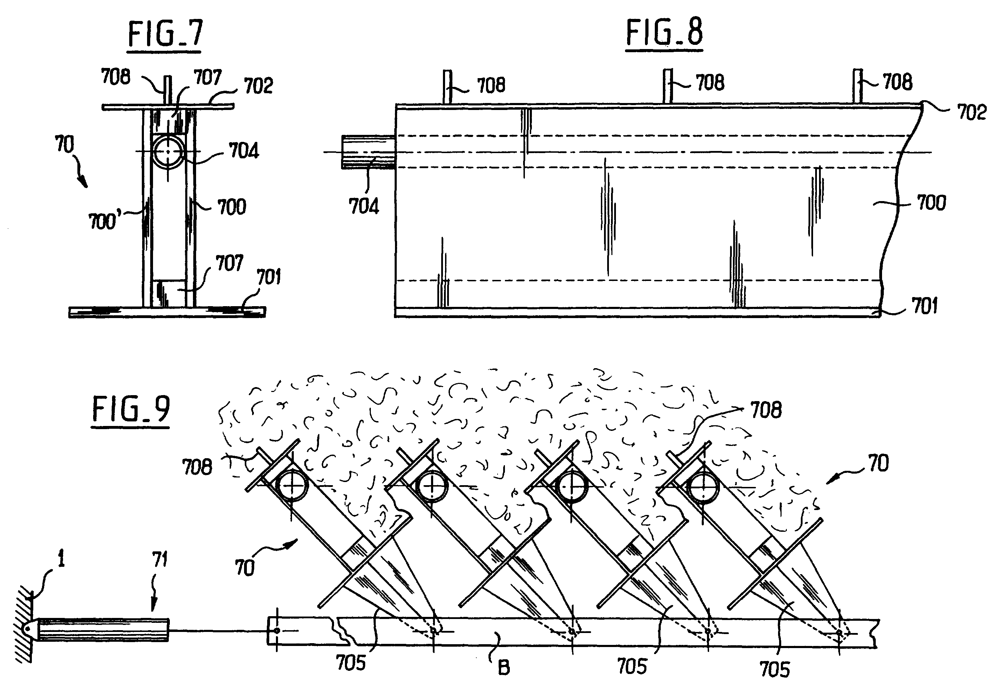

Périodiquement, la biellette B peut être actionnée par des moyens appropriés, de manière à faire basculer les éléments 70 de 90°, comme le montrent respectivement les figures 4 et 6. Ces moyens (représentés seulement à la figure 9) consistent par exemple en un vérin 71, articulé d'une part au châssis de l'unité de séchage 1 et, d'autre part, à une extrémité de la biellette **B**.

On remarquera que dans chacune de ces positions extrêmes, la section transversale de l'âme 700 des éléments occupe une position généralement oblique par rapport à la verticale, de sorte qu'elle délimite, avec les barres transversales 701 et 702 des espaces **E'** dans lesquels peut retenue de la matière. De cette manière, l'ensemble des éléments 70 constitue un fond 7 apte à retenir de la matière tout en étant très perméable à l'air. Toutefois, dans la position intermédiaire dans laquelle l'âme s'étend sensiblement verticalement, la matière n'est plus retenue et peut s'écouler entre deux éléments adjacents.

Dans une forme de réalisation non représentée, les éléments ou profilés 70 sont dépourvus de seconde barre transversale 702, de sorte qu'ils affectent, en coupe transversale, la forme générale d'un "T" renversé.

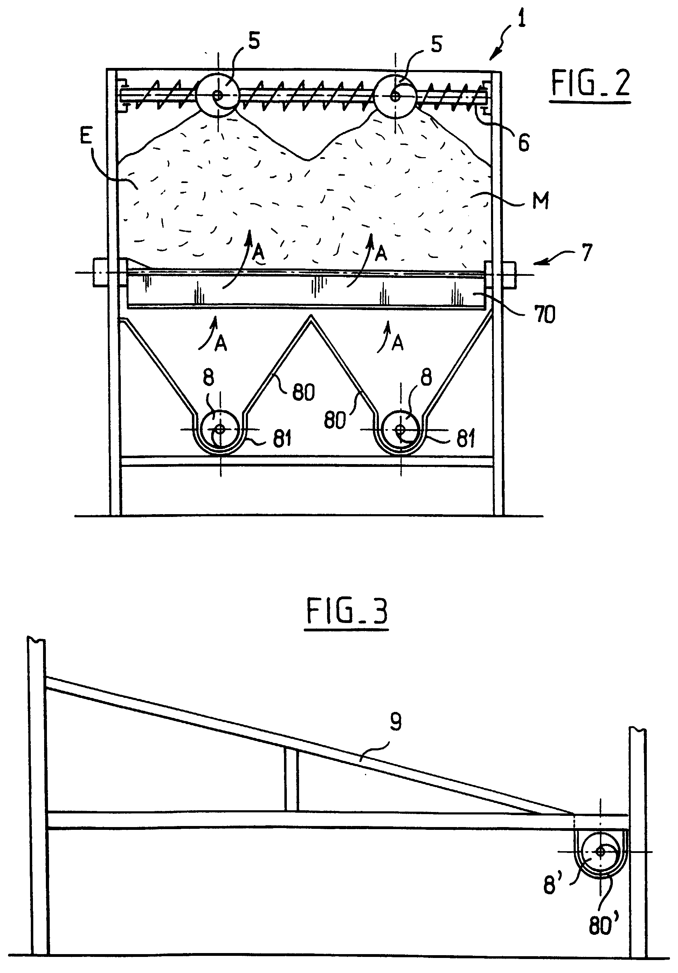

Dans la forme de réalisation de la figure 2, le fond de l'unité 1 est constitué de deux goulottes 80, dont le fond 81, en forme d'auge, reçoit une vis d'Archimède 8. Ces vis sont prévus pour réceptionner et déplacer les matières sèches provenant de l'enceinte **E**.

Dans la forme de réalisation illustrée à la figure 3, le fond de l'unité à la forme d'un plan incliné en contrebas duquel est prévue une vis d'Archimède 8' disposée dans une auge 80'.

Enfin, on précisera que l'unité 1 est pourvue de moyens d'amenée et d'insufflation d'air sec **A**. Ces moyens, tels qu'une soufflerie, sont prévus pour délivrer l'air **A** dans la zone située sous le fond 7 de l'enceinte **E**. Ce fond étant perméable à l'air, ce dernier remonte naturellement à l'intérieur de l'enceinte pour assécher les fientes qui s'y trouvent.

De manière particulièrement avantageuse, l'air **A** est en légère surpression par rapport à la pression atmosphérique, par exemple de l'ordre de 100 à 300 Pa, et plus préférentiellement de l'ordre de 150 Pa. Dans ce cas, la pression de l'air est alors de 1,00150 x 10⁵ Pa.

Le mode de réalisation des figures 7 à 9 se distingue du précédent notamment par le fait que l'âme des éléments est formée de deux plaques parallèles 700 entre lesquelles sont intercalées des entretoises 707. Les tourillons 704, qui peuvent consister en un simple et unique tube débordant de part et d'autre de l'âme, sont placés sous l'entretoise 707 la plus haute.

Par ailleurs, la face supérieure de la seconde barre transversale est pourvue d'une série de doigts unitaires 708. A titre indicatif, si la surface du fond 7 est de l'ordre de 40 m², le nombre de doigts peut être de l'ordre de mille. On expliquera plus loin leur fonction.

L'air **A** provient, de préférence, d'un bâtiment d'élevage de volailles situé à proximité de l'installation de l'invention, ce qui est peu coûteux en énergie.

Nous décrirons ci-après la façon dont on utilise l'installation de l'invention, en référence au mode de réalisation des figures 1 à 6.

Dans une étape préliminaire, on réalise un mélange de fientes fraîches, c'est-à-dire non déshydratées, avec des fientes sèches de manière à réaliser un mélange meuble **M**, perméable à l'air. Cette phase a pour but d'obtenir un produit facile à assécher, au contraire d'une masse de fientes fraîches qui constitue un produit semi-liquide, beaucoup plus difficile à manipuler et à traiter.

Les fientes fraîches sont acheminées, par exemple par tapis roulant, jusqu'à la goulotte 20 du convoyeur 2, dans laquelle elles sont déversées.

On aura introduit au préalable dans l'unité 4, des fientes sèches provenant par exemple d'une campagne précédente de séchage.

Le déplacement de ces deux matériaux par le convoyeur 2 réalise leur mélange intime de sorte que c'est un produit meuble et perméable à l'air **M** qui est déversé au-dessus de la vis 6 de l'unité 1. Ce mélange **M** comporte par exemple environ 50 % en poids de matières sèches.

Cette vis, ainsi que les vis de répartition 5, égalisent la masse de matière à l'intérieur de l'enceinte **E**.

On a pris soin préalablement de mettre en route les moyens d'insufflation d'air **A**, de sorte que celui-ci remonte à l'intérieur de l'enceinte **E**, en passant par les intervalles situés entre les éléments 70 (voir flèche A, figure 4).

Au fur et à mesure de sa progression du fond vers le sommet de l'enceinte, l'air se charge en humidité (jusqu'à environ 95 %) et assèche progressivement le mélange **M** de fientes. C'est bien entendu la couche de mélange la plus proche du fond 7 qui est asséchée la première.

Périodiquement, on actionne la biellette **B** via le vérin 71, de manière à faire basculer de 90° l'ensemble des éléments 70 du fond 7. On comprend que cette manipulation brutale fait traverser une partie du mélange **M** au travers du fond 7, puisqu'il ne se trouve plus retenu par celui-ci. Toutefois, l'opération est suffisamment rapide pour que les éléments 70 retrouvent une nouvelle position inclinée par rapport à la verticale et retiennent à nouveau les fientes, ainsi que le montrent les figures 4 et 6. C'est en fait pendant la courte période de temps où les profilés ont leur âme 700 sensiblement verticale, que s'effectue le passage d'une petite couche de fientes sèches au travers du fond.

Ces fientes sèches sont alors reprises par les vis 8 (ou 8') disposées au fond de l'unité 1 et sont réceptionnées au niveau de l'extrémité amont 30 du convoyeur 3.

Celui-ci les déplace vers l'extrémité opposée 32 à travers laquelle elles se déversent pour former un tas de fientes sèches **S**.

Une partie de celles-ci tombe dans l'unité 4, par l'ouverture 31. Elles servent alors, mélangées à de nouvelles fientes fraîches, à réaliser un nouveau mélange meuble et perméable à l'air.

De cette façon, il est possible de mettre le procédé en oeuvre de manière continue.

Il est à noter que lors du mouvement de basculement des éléments 70, les doigts 708 qui équipent la seconde forme de réalisation déplacent et réalisent un brassage de la matière la plus proche du fond, désagrégeant ainsi les mottes ou agglomérats qui auraient pu se former.

La technique selon l'invention permet de récupérer régulièrement, à l'aide de moyens simples et en consommant peu d'énergie, une couche régulière et uniforme de fiente, c'est à dire au sein de laquelle le taux de siccité est partout le même.

Enfin, bien que la présente invention ait été décrite en référence à des fientes de volailles, d'autres types de déjections peuvent être également traitées.

## Revendications

1. Installation de séchage de déjections d'animaux, notamment de fientes de volailles, du type comprenant:
- des moyens (2, 4) pour mélanger des déjections fraîches avec des déjections sèches ;
- une enceinte de séchage (E) adaptée pour recevoir le mélange (M) ainsi réalisé, le fond (7) de celle-ci étant prévu pour retenir le mélange (M) tout en étant perméable à l'air, ce fond (7) consistant en un ensemble d'éléments adjacents (70) aptes à former chacun un moyen de retenue des déjections et comportant des moyens (71, B) qui permettent, périodiquement, de transférer hors de l'enceinte (E) et au travers de ce fond (7), une couche de déjections sèches;
- des moyens d'insufflation d'air (A) dans ladite enceinte (E), au travers dudit fond (7);
caractérisée par le fait que lesdits éléments (70) consistent en des profilés parallèles présentant une âme longitudinale (700) et au moins une partie généralement transversale (701, 702), articulés autour d'axes disposés sensiblement dans un même plan horizontal, et que lesdits moyens (71, B) sont adaptés pour faire basculer simultanément les profilés (70) entre deux positions extrêmes dans lesquelles la section transversale de ladite âme (700) s'étend généralement obliquement par rapport à la verticale, de sorte qu'ils retiennent les déjections, via une position intermédiaire dans laquelle la section transversale de ladite âme (700) occupe une position généralement verticale, autorisant l'écoulement des déjections entre les profilés (70).

2. Installation selon la revendication 1, caractérisée par le fait que chaque profilé (70) affecte en coupe transversale, la forme générale d'un "T" renversé, avec une branche longitudinale formée par ladite âme (700) et une barre transversale (701).

3. Installation selon la revendication 2, caractérisée par le fait que ledit profilé (70) comporte une seconde barre transversale (702), parallèle et opposée à la première (701), de sorte qu'il affecte la forme générale d'un "I" en coupe transversale.

4. Installation selon la revendication 3, caractérisée par le fait que la face supérieure de la seconde barre transversale (702) est pourvue d'une série de doigts (708), généralement parallèles à la branche longitudinale (700).

5. Installation selon l'une des revendication 1 à 4, caractérisée par le fait que le basculement simultané desdits éléments (70) est réalisé au moyen d'au moins une biellette (B).

6. Installation selon la revendication 5, caractérisée par le fait que ladite biellette (B) est articulée par rapport auxdits éléments (70), au moyen d'une pièce (705) rapportée à la première barre transversale (701).

7. Installation selon la revendication 5 ou 6, caractérisée par le fait qu'elle comprend des moyens d'actionnement de ladite biellette (B), tels qu'un vérin (71).

8. Installation selon l'une des revendications 1 à 7, caractérisée en ce que les moyens aptes à mélanger des déjections fraîches avec des déjections sèches comprennent une vis d'Archimède (2).

9. Installation selon l'une des revendications 1 à 8, caractérisée en ce qu'elle comprend des moyens (3) pour acheminer une partie des déjections sèches transférées hors de l'enceinte (E) vers les moyens de mélange (4, 2) avec des déjections fraîches.

10. Installation selon l'une des revendications 1 à 9, caractérisée en ce que l'air d'insufflation (A) provient d'un bâtiment d'élevage desdits animaux.

## Patentansprüche

1. Anlage zur Trocknung von Tierexkrementen, insbesondere von Geflügelexkrementen, der Art mit:
- Einrichtungen (2, 4) zum Mischen von frischen Exkrementen mit trockenen Exkrementen;
- einem Trocknungsbehälter (E), welcher dafür eingerichtet ist, die so hergestellte Mischung (M) aufzunehmen, wobei dessen Boden (7) dafür vorgesehen ist, die Mischung (M) zurückzuhalten, und er luftdurchlässig ist, wobei dieser Boden (7) aus einer Anordnung von aneinander anstoßenden Elementen (70) besteht, welche dafür eingerichtet sind, jeweils eine Rückhalteeinrichtung für die Exkremente zu bilden, und er Einrichtungen (71, B) aufweist, die ermöglichen, eine Schicht getrockneter Exkremente periodisch durch diesen Boden (7) aus dem Behälter (E) heraus zu transportieren;
- Einrichtungen zum Einblasen von Luft (A) in den Behälter (E) durch den Boden (7);
dadurch gekennzeichnet, daß die Elemente (70) aus parallelen Profilteilen bestehen, welche einen Längssteg (700) und zumindest einen allgemein querliegenden Teil (701, 702) aufweisen, und welche um praktisch in einer gleichen horizontalen Ebene angeordnete Achsen herum gelenkig angebracht sind, und daß die Einrichtungen (71, B) dafür eingerichtet sind, die Profilteile (70) gleichzeitig zwischen zwei Extrempositionen hin- und herzuschwingen, in welchen sich der Querschnitt des Steges (700) allgemein quer bezüglich der Vertikalen erstreckt, so daß sie die Exkremente zurückhalten, über eine Zwischenposition, in welcher der Querschnitt des Steges (700) eine allgemein vertikale Position einnimmt, welche die Ausleerung der Exkremente zwischen den Profilteilen (70) ermöglicht.

2. Anlage gemäß Anspruch 1, dadurch gekennzeichnet, daß jedes Profilteil (70) im Querschnitt die allgemeine Form eines umgedrehten "T" mit einem Längsarm, welcher von dem Steg (700) und einer Querstange (701) gebildet ist, einnimmt.

3. Anlage gemäß Anspruch 2, dadurch gekennzeichnet, daß das Profilteil (70) eine zweite Querstange (702) aufiveist, welche parallel zu der ersten (701) und ihr gegenüberliegend angeordnet ist, so daß es im Querschnitt die allgemeine Form eines "I" einnimmt.

4. Anlage gemäß Anspruch 3, dadurch gekennzeichnet, daß die obere Fläche der zweiten Querstange (702) mit einer Reihe Finger (708) ausgestattet ist, welche allgemein parallel zu dem Längsarm (700) liegen.

5. Anlage gemäß einem der Ansprüche 1 bis 4, dadurch gekennzeichnet, daß das gleichzeitige Hin- und Herschwingen der Elemente (70) mittels zumindest eines Schwingarmes (B) durchgeführt wird.

6. Anlage gemäß Anspruch 5, dadurch gekennzeichnet, daß der Schwingarm (B) bezüglich der Elemente (70) mittels eines auf der ersten Querstange (701) aufgesetzten Teiles (705) gelenkig angebracht ist.

7. Anlage gemäß Anspruch 5 und 6, dadurch gekennzeichnet, daß sie Antriebseinrichtungen für den Schwingarm (B), wie ein Stellglied (71), aufweist.

8. Anlage gemäß einem der Ansprüche 1 bis 7, dadurch gekennzeichnet, daß die Einrichtungen, welche dafür eingerichtet sind, frische Exkremente mit getrockneten Exkrementen zu mischen, eine archimedische Schraube (2) aufweisen.

9. Anlage gemäß einem der Ansprüche 1 bis 8, dadurch gekennzeichnet, daß sie Einrichtungen (3) aufweist, um einen Teil der aus dem Behälter (E) heraustransportierten, getrockneten Exkremente zu den Mischeinrichtungen (4, 2) mit den frischen Exkrementen hinzuleiten.

10. Anlage gemäß einem der Ansprüche 1 bis 9, dadurch gekennzeichnet, daß die Einblasluft (A) aus einem Gebäude für die Haltung der Tiere herkommt.

## Claims

1. An installation for drying animal excreta, in particular poultry droppings, the installation being of the type comprising:
• means (2, 4) for mixing fresh excreta with dry excreta;
• a drying enclosure (E) adapted to receive the mixture (M) made in this way, the bottom (7) of the enclosure being designed to retain the mixture (M) while being permeable to air, said bottom (7) constituting a set of adjacent elements (70) each suitable for forming excreta-retaining means and having means (71, B) enabling a layer of dry excreta to be transferred periodically from the enclosure (E) through said bottom (7);
• air-delivery means (A) for delivering air into said enclosure (E) through said bottom (7);
the installation being characterized by the fact that said elements (70) are constituted by parallel section members each having a longitudinal web (700) and at least one generally transverse portion (701, 702). the section members being hinged about axes disposed substantially in a common horizontal plane, and that said means (71, B) are adapted to cause the section bars (70) to tilt simultaneously between two extreme positions in which the cross-section of each said webs (700) extends generally obliquely relative to the vertical. so that they retain the excreta, via an intermediate position in which the cross-section of each web (700) occupies a generally vertical position allowing the excreta to flow between the section members (70).

2. An installation according to claim 1, characterized by the fact that each section member (70) has a cross-section that is generally in the form of a upside-down T-shape, with a longitudinal limb formed by said web (700) and with a transverse limb (701).

3. An installation according to claim 2, characterized by the fact that said section member (70) has a second transverse limb (702) that is parallel to and opposite from the first (701), so that in cross-section the section member is generally I-shaped.

4. An installation according to claim 3, characterized by the fact that the top face of the second transverse limb (702) is provided with a series of fingers (708) generally parallel to the longitudinal limb (700).

5. An installation according to any one of claims 1 to 4, characterized by the fact that the said elements (70) are tilted simultaneously by means of at least one connecting rod (B).

6. An installation according to claim 5, characterized by the fact that said connecting rod (B) is hinged relative to said elements (70) by means of respective pieces (705) fitted to the first transverse limbs (701) thereof.

7. An installation according to claim 5 or 6, characterized by the fact that it includes means for driving said connecting rod (B), such as an actuator (71).

8. An installation according to any one of claims 1 to 7, characterized in that the means suitable for mixing fresh excreta with dry excreta comprise an Archimedes' screw (2).

9. An installation according to any one of claims 1 to 8. characterized in that it includes means (3) for conveying a fraction of the dry excreta transferred from the enclosure (1) to the means (4, 2) for mixing them with fresh excreta.

10. An installation according to any one of claims 1 to 9, characterized in that the air that is delivered comes from a building in which said animals are kept.
